Europäisches Patentamt

European Patent Office

Office européen des brevets

(19)

(11) EP 0 477 342 B1

(12) FASCICULE DE BREVET EUROPEEN

(45) Date de publication et mention
de la délivrance du brevet:
**24.01.1996 Bulletin 1996/04**

(21) Numéro de dépôt: **91908240.4**

(22) Date de dépôt: **16.04.1991**

(51) Int Cl.[6]: **C08J 3/24**

(86) Numéro de dépôt international:
**PCT/FR91/00314**

(87) Numéro de publication internationale:
**WO 91/16373 (31.10.1991 Gazette 1991/25)**

(54) **PROCEDE DE RETICULATION DE (CO)POLYMERES ESTERIFIES**

VERFAHREN ZUR VERNETZUNG VON ESTERIFIZIERTEN (CO)POLYMEREN

PROCESS FOR CROSS-LINKING ESTERIFIED (CO)POLYMERS

(84) Etats contractants désignés:
**AT BE CH DE DK ES FR GB GR IT LI LU NL SE**

(30) Priorité: **17.04.1990 FR 9004896**

(43) Date de publication de la demande:
**01.04.1992 Bulletin 1992/14**

(73) Titulaires:
• **CENTRE NATIONAL DE,
LA RECHERCHE SCIENTIFIQUE
F-75007 Paris (FR)**
• **SOTRA Industries
F-78500 Andrésy (FR)**

(72) Inventeurs:
• **GONDARD, Christian
F-42300 Roanne (FR)**
• **MICHEL, Alain
F-69004 Lyon (FR)**

(74) Mandataire: **Santarelli, Marc
F-75017 Paris (FR)**

(56) Documents cités:
**DD-A- 218 626**

• **CHEMICAL ABSTRACTS, vol. 70, no. 14, 7 avril
1969, pages 12,13, abstractNo.58452k,
(Columbus, Ohio, US), & JP-A-68 22 111**

Remarques:
Le dossier contient des informations techniques
présentées postérieurement au dépôt de la demande et ne figurant pas dans le présent fascicule.

Printed by Jouve, 75001 PARIS (FR)

## Description

La présente invention concerne un procédé de réticulation de (co)polymères estérifiés, des compositions réticulables et des objets conformés.

La réticulation d'un thermoplastique est un moyen de choix pour améliorer sa résistance au fluage dans un domaine de température plus large et par voie de conséquence pour obtenir une meilleure stabilité dimensionnelle des objets élaborés.

Plusieurs procédés ont été proposés pour réticuler les thermoplastiques tels que le polychlorure de vinyle et les polyoléfines. Ces procédés sont basés sur des réactions radicalaires, des réactions de condensation, ou des réactions de substitution nucléophile.

Ainsi pour réaliser la réticulation du polyéthylène le procédé SIOPLAST de Dow Chemical propose le greffage radicalaire de monomères vinyliques comportant des groupements alcoxysilanes qui conduisent par hydrolyse à des groupements silanols qui par polycondensation entraîne la réticulation du polyéthylène. Ce procédé est utilisé industriellement en câblerie. Il présente cependant l'inconvénient de provoquer un gradient de densité de réticulation car celle-ci est gouvernée par la diffusion de l'eau dans l'objet fini, eau nécessaire à la réaction d'hydrolyse des fonctions alcoxysilanes.

Pour réticuler le polychlorure de vinyle on a développé des procédés par voie photochimique, par bombardement électronique et par irradiation gamma en soumettant le polymère à ces radiations en présence d'un monomère plurifonctionnel tel que par exemple le diméthacrylate de tétraéthylène glycol ou le triméthacrylate du triméthylol propane, la réaction de réticulation étant assurée par le greffage et la polymérisation de ces momères sur le squelette polymère.

Les inconvénients majeurs de ces procédés sont d'une part la sensibilité du polychlorure de vinyle vis-à-vis de ces rayonnements qui induisent sa dégradation par élimination d'HCl en cascade et d'autre part la présence d'une quantité de monomère élevée pour obtenir une réticulation efficace et homogène qui a pour conséquence de modifier ses propriétés intrinsèques. Les procédés par rayonnement gamma et par bombardement électronique exigent en outre un niveau technologique élevé et un appareillage onéreux ce qui limite la vulgarisation.

Pour pallier ces inconvénients on a proposé pour le polychlorure de vinyle des procédés faisant intervenir une réaction de substitution nucléophile des atomes de chlore par les thiolates alcalins ou alcalino-terreux ou par des composés mixtes thiolate-carboxylate alcalin ou alcalino-terreux. Ces procédés sont bien adaptés pour réaliser la réticulation sur une ligne d'enduction, mais ils présentent un inconvénient majeur en sensibilisant fortement les matériaux réticulés vis-à-vis de la dégradation photochimique induite par les traces de disulfures toujours présentes et difficiles à éliminer en présence de composés thiols. Pour cette raison le développement de ces procédés ne s'est pas généralisé.

DD-A-218 626 décrit la coréticulation de copolymères contenant des groupements anhydride maléique et de copolymères de l'éthylène et de l'acétate de vinyle partiellement hydroxylés, les ponts de réticulation étant formés par réactions des groupements anhydride avec les groupements alcool.

Chemical Abstract, vol. 70, N° 14, 7 Avril 1969, Colombus, Ohio, US JP-A-68 22 111 décrit le greffage de fonctions amines sur des copolymères de l'éthylène et de l'acétate de vinyle par des réactions d'échange entre les groupements acétates et des esters d'acides aminés, réactions catalysées par des alcoolates de sodium.

Le brevet européen n° 0.032.587 propose un procédé de réticulation de copolymères d'esters acryliques par des diols, ou des diesters de diols en présence de titanate de formule générale Ti (OR)$_4$, les quatres groupes OR pouvant être identiques ou différents. La présence de titanate dans le matériau réticulé peut entraîner sous l'action de l'humidité la formation de TiO$_2$, un catalyseur bien connu des réactions de photooxydation. Ceci peut donc être un inconvénient majeur pour l'utilisation de tels matériaux à l'extérieur.

Le brevet britannique n° 907.775 décrit un procédé de traitement du polyacétate de vinyle par un alcoolate métallique de formule M (OR)n, M pouvant être en particulier le titane ou l'étain, la réaction s'effectue à 80°C dans un solvant et conduit à une substitution des radicaux acétates par des radicaux titanates ou stannates conduisant à la formation d'un polymère organométallique.

On cherche donc toujours un procédé de réticulation des polymères ou copolymères thermoplastiques qui soit simple, peu coûteux, conduisant à des matériaux réticulés insensibles au vieillissement photochimique et qui puisse être intégré aux opérations de mise en forme sur une ligne de production industrielle telle que l'extrusion, le calandrage, l'enduction, l'injection ou le thermoformage.

La présente invention répond à ces exigences. En effet elle a pour objet un procédé de réticulation de polymères ou copolymères contenant des fonctions esters, seuls ou en mélange entre eux, qui puisse être intégré à des opérations de mise en oeuvre industrielle par extrusion, injection, calandrage, enduction ou thermoformage et qui ne contient pas de composés métalliques ayant des propriété photocalytiques connues.

C'est pourquoi la présente demande a pour objet un procédé de réticulation de (co)polymères comportant des fonctions esters caractérisé en ce que l'on fait réagir un (co)polymère comportant des fonctions ester latérales et dérivant d'un polyol et un (co)polymère comportant des fonctions ester latérales et dérivant d'un polyacide en présence d'un alcoolate alcalin à une température supérieure à 180°.

Selon l'invention par (co)polymère comportant des fonctions ester latérales et dérivant d'un polyol on entend les polymères et copolymères de l'acétate de vinyle ainsi que les (co)polymères de molécules comportant au moins deux fonctions alcools. Ces dernières molécules renferment par exemple 2 à 20 atomes de carbone, et peuvent être d'une grande variété. On peut citer des diols notamment des alcane-diols tels que l'éthylène glycol ou le propane-diol ; des polyols notamment des triols tels que le glycérol ou le triméthylol propane. Des oses ou osides tels que le glucose, fructose, l'amidon ; des dérivés comme l'alcool polyvinylique ; des polymères ou copolymères comportant des fonctions acrylate d'hydroxy éthyle par exemple.

Selon l'invention par (co)polymère comportant des fonctions ester latérales et dérivant d'un polyacide on entend les polymères et copolymères d'esters acryliques et méthacryliques ainsi que les (co)polymères de molécules comportant au moins deux fonctions acides telles que les acides phtalique, adipique, succinique, maléique, les acides du cycle de Krebs, etc ...

Les esters des dérivés ci-dessus sont de préférence des esters de faible poids moléculaire, inférieur à 1000, notamment à 300, tels que les esters méthylique, éthylique, propylique, etc ...

Dans les conditions préférentielles de mise en oeuvre du procédé ci-dessus décrit, l'alcoolate est dispersé dans la matrice polymère à l'aide d'un de ses solvants.

Des procédés préférentiels selon la présente invention sont caractérisés en ce que :

- le (co)polymère comportant des fonctions ester latérales et dérivé d'un polyol est un (co)polymère de l'acétate de vinyle.
- le (co)polymère comportant des fonctions ester latérales et dérivé d'un polyacide est un (co)polymère dérivant de l'acide (méth)acrylique.

L'invention a également pour objet des compositions réticulables pouvant être mises en oeuvre par le procédé décrit selon la présente invention. C'est pourquoi la présente demande a aussi pour objet les compositions réticulables caractérisées en ce qu'elles renferment un (co)polymère comportant des fonctions ester latérales et dérivant d'un polyol, un (co)polymère comportant des fonctions ester latérales et dérivé d'un polyacide et un alcoolate alcalin.

Des compositions préférées selon la présente invention sont caractérisées en ce qu'elles renferment en outre un solvant de l'alcoolate.

La présente demande a particulièrement pour objet des compositions réticulables caractérisées en ce que le (co) polymère comportant des fonctions ester latérales et dérivant d'un polyol est un (co)polymère de l'acétate de vinyle, notamment un copolymère de l'acétate de vinyle et du PVC et celles caractérisées en ce que le (co)polymère comportant des fonctions ester latérales et dérivant d'un polyacide est un (co)polymère dérivant de l'acide (méth)acrylique, notamment un copolymère du PVC ou de l'éthylène et d'un ester de l'acide (méth)acrylique.

Lorsqu'on dit qu'une composition comprend un certain produit, on entend que celle-ci renferme au moins un produit de ce type, par exemple au moins un (co)polymère comportant des fonctions ester latérales et dérivant d'un polyol. On pourra par exemple faire réagir un mélange de deux (co)polymères différents comportant des fonctions ester latérales et dérivant de polyols avec un (co)polymère comportant des fonctions ester latérales et dérivant d'un polyacide.

Dans le cas de l'utilisation de copolymères, les comonomères peuvent être en proportions respectives variables.

Les compositions selon l'invention peuvent de plus contenir les adjuvants habituellement utilisés dans l'industrie des matières plastiques charges, plastifiants, antioxydants, stabilisants, pigments, colorants, etc ... Ces constituants peuvent être ajoutés dès le début du procédé lors de l'étape de mélange de produits réticulables.

Un avantage selon l'invention est le contrôle et l'adaptation de la densité de réticulation en fonction des propriétés recherchées par une maîtrise de la concentration des espèces réactives de la composition réticulable et de la composition des polymères et copolymères de l'acétate de vinyle et des esters acryliques et méthacryliques.

Selon un avantage de l'invention, la température de réticulation peut être adaptée en fonction du procédé de mise en oeuvre des compositions relevant de cette invention de façon que la réticulation ne soit pas trop avancée dans la phase de mise en forme des procédés classiques tels que l'extrusion, le calandrage, l'injection, l'enduction et le moulage, la réticulation étant terminée après l'étape de mise en forme, par exemple dans un conformateur où à l'intérieur d'un moule dans le cas de l'injection, en jouant sur les paramètres temps et températures.

Selon l'invention, les propriétés de tenue au fluage et de stabilité dimensionnelle des objets polymères façonnés seront nettement améliorées après réticulation.

Selon l'invention la coréticulation de mélange de polymères ou copolymères de l'acétate de vinyle avec des copolymères d'esters acryliques est également un moyen de stabiliser ces mélanges vis-à-vis des phénomènes de démixtion.

La présente demande vise enfin des objets conformés, caractérisés en ce qu'ils sont préparés à partir de produits obtenus par la mise en oeuvre du procédé ci-dessus décrit, de même que les objets conformés constitués d'une composition telle que définie ci-dessus.

Les exemples qui suivent illustrent l'invention sans toutefois la limiter.

La réticulation des polymères, copolymères, mélanges de polymères et/ou de copolymères et des compositions réticulables selon l'invention est caractérisée soit à l'aide d'un plastographe Haake en phase dynamique, équipé d'un mélangeur interne de capacité 60 ml type Rheomix 600. Cet appareil permet de suivre en continu l'évolution du couple résistant exercé par le polymère sur les pales du malaxeur. La réticulation du polymère entraîne une augmentation de la viscosité à l'état fondu et par conséquent une augmentation du couple observé après la gélification ou la fusion du polymère. La variation du couple $\Delta$ C entre le couple atteint après gélification ou fusion (Cmin) et le couple maximum (Cmax) atteint en fin d'expérience est un critère de réticulation.

Deux autres critères ont été utilisés pour évaluer la cinétique de réaction en phase dynamique : le temps Ti au bout duquel se produit une augmentation du couple résistant, caractéristique d'une réticulation significative, et la vitesse d'augmentation du couple entre la valeur maximale (Cmax) et minimale (Cmin) assimilée à la vitesse moyenne de réticulation.

Un autre critère caractérisant le degré de réticulation d'un polymère est le pourcentage de polymère insoluble dans un des solvants, par exemple le tétrahydrofuranne (THF) pour les copolymères du chlorure de vinyle et de l'acétate de vinyle ou d'esters acryliques et méthacryliques.

La réticulation des polymères, copolymères et mélanges de polymères ou de copolymères et des compositions selon l'invention a également été suivie en conditions statiques à l'aide d'une presse à plateaux chauffant après gélification ou fusion dans le malaxeur interne Rheomix 600 équipant le plastographe Haake pour obtenir une bonne homogénéisation des réactifs et des (co)polymères. Cette première phase étant réalisée, le matériau gélifié ou fondu est transféré dans un moule rectangulaire de 3 mm d'épaisseur placé lui-même entre les plateaux d'une presse chauffante.

Après un temps de cuisson à une température donnée, généralement 5 minutes, la plaque moulée est refroidie rapidement. Le degré de réticulation dans ces conditions est évalué par le taux de polymère insoluble dans un de ses solvants et/ou par le taux de gonflement dans ce solvant, défini par la relation :

$$G = \frac{(Mg - Mf)/\rho s + Mp/\rho p}{Mp/\rho p}$$

Mg étant la masse de l'échantillon gonflé, Mp la masse du polymère insoluble, $\rho s$ et $\rho p$ étant les masses volumiques respectivement du solvant et du polymère. Pour le THF $\rho s$ = 0,948 g/cm3 et pour le polychlorure de vinyle $\rho p$= 1, 38 g/cm3.

Dans tous les exemples suivants le stabilisant thermique utilisé est le dioctyle étain dithioglycolate d'isooctyle à raison de 2 g pour 100 g de polymère.

Les tableaux 1 et 2 (exemples 1 à 14) illustrent la réticulation de copolymères chlorure de vinyle - acétate de vinyle par des diesters de diacide (mole de diester/mole d'unité acétate = 0,41) en phase dynamique à 200°C et rassemble les exemples de réticulation des copolymères du chlorure de vinyle et de l'acétate de vinyle par des diesters des acides phtalique, isophtalique, succinique et adipique en présence de méthylate de sodium ou d'éthylate de sodium dispersé dans la matrice polymère à l'aide de solvants comme le butyl carbitol ou le sùlfolane. Ces exemples montrent que les esters méthyliques des acides phtaliques et adipique sont les plus efficaces pour la réticulation des copolymères chlorure de vinyle-acétate de vinyle et lorsque la teneur en acétate du copolymère diminue l'adipate de diméthyle reste l'agent réticulant le plus efficace si on se réfère à la vitesse moyenne de réticulation.

Pour tous les exemples consignés dans ces tableaux, excepté l'exemple 4, la fraction de polymère insoluble dans le tétrahydrofuranne en fin d'essai est supérieure à 50 %.

Le tableau 3 montre la réticulation de copolymère chlorure de vinyle - acrylate d'éthyle-2-hexyle par le triacétate de 1-1-1-triméthylol propane (teneur pondérale du copolymère en acrylate d'éthyle-2-hexyle : 12 %) en phase dynamique à 205°C).

Les deux exemples du Tableau 3 illustrent la réticulation des copolymères chlorure de vinyle - acrylate d'éthyle-2-hexyle par le triacétate de triméthylol propane. Pour l'exemple 15 le taux de polymère insoluble dans le tétrahydrofuranne est inférieur à 50 % et il dépasse 50 % pour l'exemple 16.

Le Tableau 4 illustre la co-réticulation en phase dynamique à 205°C de mélanges de co-polymères chlorure de vinyle - acétate de vinyle et de copolymères chlorure de vinyle - acrylate d'éthyle-2-hexyle, et regroupe les exemples qui illustrent la coréticulation des mélanges de copolymères chlorure de vinyle acétate de vinyle et de copolymères, chlorure de vinyle acrylate d'éthyle-2-hexyle en présence d'ethylate de sodium. L'exemple 17 montre la forte réactivité du mélange de copolymère chlorure de vinyle acétate de vinyle et de copolymère chlorure de vinyle - acrylate d'éthyle-2-hexyle lorsque la teneur en acrylate est de 23 % ; pour les exemples 17, 18 et 19 le taux de polymère insoluble dans le tétrahydrofuranne en fin d'expérience est supérieure à 50 %.

Pour l'essai 20 realisé avec un copolymère chlorure de vinyle - acétate de vinyle à 4 % en poids la fraction de polymère insoluble dans le tétrahydrofuranne en fin d'essai est inférieure à 50 %.

Ces exemples montrent la large gamme de mélanges de copolymères chlorure de vinyle - acétate de vinyle et copolymères chlorure de vinyle - esters acryliques qu'il est possible de réticuler selon l'invention.

Le Tableau 5 illustre la coréticulation en phase statique de copolymères chlorure de vinyle - acétate de vinyle et copolymères chlorure de Vinyle - acrylate d'éthyle-2-hexyle (éthylate de sodium 19,0.10$^{-2}$ mole par Kg de copolymère - sulfolane 16,24.10$^{-2}$ mole par kg de polymère) ; Temps de cuisson sous presse 5 min. à 205° C., et regroupe les exemples de réticulation en phase statique à 205°C durant 5 minutes de différents mélanges de copolymère chlorure de vinyle - acétate de vinyle et de copolymère chlorure de vinyle - acrylate d'éthyle-2-hexyle en présence d'éthylate de sodium couvrant une large gamme de composition. Pour tous ces exemples le taux de polymère insoluble dans le tétrahydrofuranne est compris entre 95 et 100 % après 5 minutes de cuisson à 205°C ce qui prouve l'efficacité du procédé. Ces exemples montrent également qu'il est possible de faire varier le taux de gonflement du réticulat dans une fourchette assez large (16 à 30) et par voie de conséquence le procédé selon la présente invention permet d'obtenir des matériaux réticulés dans une large gamme de propriétés.

Le Tableau 6 illustre la coréticulation en phase dynamique de copolymères chlorure de vinyle-acétate de vinyle et polymères et copolymères d'esters acryliques. (Pour les exemples 28 et 29 la température est de 205°C, et pour les exemples 30 et 31 la température est de 200°C), et regroupe des exemples de coréticulation de copolymère chlorure de vinyle-acétate de vinyle avec soit le polyacrylate d'éthyle, soit un copolymère d'acrylate de butyle et de méthyle, soit des copolymères d'éthylène et d'acrylate d'éthyle ou de butyle. Pour les exemples 28 et 29 la fraction de polymère insoluble dans le tétrahydrofuranne est supérieure à 50 % en fin d'essai. Pour les exemples 30 et 31, le taux de polymère insoluble dans le toluène à 110°C est supérieur à 50 % en fin d'essai. Les temps d'induction courts et les vitesses de réticulation élevées pour les exemples 30 et 31 remettent également en évidence la grande réactivité de ces systèmes réticulants en présence d'alcoolate de sodium.

TABLEAU 1

| EX | Diester | Système réticulant : méthylate de sodium | éthylate de sodium | butyl carbitol | sulfolane | Teneur pondérale en acétate du copolymère PVC acétate de vinyle % | $T_m$ mn | $T_i$ mn | $\Delta$ c N.m | $V_R$ Nm.mn$^{-1}$ |
|---|---|---|---|---|---|---|---|---|---|---|
| | | (mole/Kg Polymère x 10$^2$) | | | | | | | | |
| 1 | phtalate de diméthyle | 24,1 | | 20,1 | | 11 | 9 | 4 | 22 | 4,5 |
| 2 | phtalate de diéthyle | 24,1 | | 20,1 | | 11 | 11,5 | 4,5 | 22 | 3,1 |
| 3 | phtalate de dibutyle | 24,1 | | 20,1 | | 11 | 14 | 4,5 | 23 | 2,4 |
| 4 | phtalate d'éthyle-2 hexyle | 24,1 | | 20,1 | | 11 | 20 | 20 | 5 | 0 |
| 5 | isophtalate de diméthyle | 24,1 | | 20,1 | | 11 | 14 | 4 | 16 | 1,7 |
| 6 | succinate de diméthyle | 24,1 | | 20,1 | | 11 | 20 | 13 | 10 | 1,4 |
| 7 | adipate de diméthyle | 24,1 | | 20,1 | | 11 | 6,5 | 2,5 | 20 | 5,0 |
| 8 | phtalate de diméthyle | | 19,0 | | 22,5 | 11 | 11 | 4,5 | 20 | 3,1 |
| 9 | phtalate de diméthyle | | 19,0 | | 22,5 | 6 | 12 | 5 | 18 | 2,5 |
| 10 | phtalate de diméthyle | | 19,0 | | 22,5 | 4 | 12 | 6 | 2 | 0,3 |

EP 0 477 342 B1

TABLEAU 2

| Ex. | Diester | Système réticulant : | | | | Teneur pondérale en acétate du copolymère PVC acétate de vinyle % | $T_m$ mn | $T_i$ mn | $\Delta C$ N.m | $V_R$ Nm.mn$^{-1}$ |
| | | méthylate de sodium mole/kg polymère x 10² | éthylate de sodium mole/kg polymère x 10² | butyl carbitol | sulfolane mole/kg polymère x 10² | | | | | |
|---|---|---|---|---|---|---|---|---|---|---|
| 11 | adipate de diméthyle | | 19,0 | | 22,5 | 11 | 7,5 | 2,5 | 21 | 4,2 |
| 12 | adipate de diméthyle | | 19,0 | | 22,5 | 6 | 9 | 5 | 15 | 3,7 |
| 13 | adipate de diméthyle | | 19,0 | | 22,5 | 4 | 7,5 | 4,5 | 6 | 2 |
| 14 | phtalate de diméthyle | | 24,1 | | 22,5 | 11 | 10 | 4,5 | 24 | 4,3 |

TABLEAU 3

| Ex. | Méthylate de sodium | Butyl carbitol | Rapport molaire acétate/acrylate | $T_m$ | $T_i$ | $\Delta C$ | $V_R$ |
|---|---|---|---|---|---|---|---|
| | mole/kg de polymère $\times$ 10² | | acétate/acrylate | mn | mn | N.m | N.m.mn$^{-1}$ |
| 15 | 24,1 | 20,1 | 2,05 | 12,5 | 5 | 5 | 0,66 |
| 16 | 24,1 | 20,1 | 1,65 | 9 | 4 | 18 | 3,6 |

TABLEAU 4

| Ex. | Ethylate de Sodium Mole/kg de copolymère $\times 10^2$ | Sulfolane | Teneur en acétate de de vinyle du copolymère PVC - acétate % | Teneur en acrylate d'éthyle-2-hexyle du co-polymère PVC - acrylate % | Composition du mélange de copolymères PVC-acétate % | PVC-acryl. % | $T_m$ mn | $T_i$ mn | $\Delta C$ | $V_R$ N.m.mn$^{-1}$ |
|---|---|---|---|---|---|---|---|---|---|---|
| 17 | 19 | 22,5 | 11 | 23 | 67,5 | 32,5 | 6 | 3,5 | 18 | 10,4 |
| 18 | 19 | 22,5 | 11 | 12 | 50 | 50 | 8 | 5 | 12 | 4 |
| 19 | 19 | 22,5 | 6 | 12 | 64,5 | 35,5 | 8 | 4,5 | 14 | 4 |
| 20 | 19 | 22,5 | 4 | 12 | 73 | 27 | 8 | 5 | 12 | 4 |

EP 0 477 342 B1

| Ex. | Composition pondérale du mélange | | | Rapport molaire acétate/ acrylate | Taux de gonflement dans la cyclohexanone après 144 h |
|---|---|---|---|---|---|
| | copolymère-PVC acétate de vinyle (11 %) | copolymère-PVC acrylate d'éthyle-2-hexyle (12 %) | copolymère PVC acrylate d'éthyle-2 hexyle (23 %) | | |
| 21 | 33 | 57 | | 1,48 | 24 |
| 22 | 50 | 50 | | 1,93 | 21 |
| 23 | 60 | 40 | | 2,96 | 20 |
| 24 | 70 | 30 | | 4,68 | 30 |
| 25 | 60 | | 40 | 1,54 | 21 |
| 26 | 57,5 | | 32,5 | 2,15 | 16 |
| 27 | 75 | | 25 | 3,09 | 23 |

TABLEAU 5

**TABLEAU 6**

| EX | Copolymère PVC-acétate de vinyle (11%) | Composition pondérale du mélange : % | | copolymère d'éthylène | |
|---|---|---|---|---|---|
| | | polyacrylate d'éthyle | copolymère acrylate de butyle (50%) acrylate de méthyle (50%) | acrylate d'éthyle (9%) | acrylate de butyle (17%) |
| 28 | 88,6 | 11,4 | | | |
| 29 | 75,3 | | 24,7 | | |
| | Copolymère PVC-acétate de vinyle (26%) | | | | |
| 30 | 27 | | | 73 | |
| 31 | 30 | | | | 70 |

| EX | éthylate de sodium | méthylate de sodium | sulfolane | butyl carbitol | $T_m$ | $T_i$ | $\Delta c$ | $V_R$ |
|---|---|---|---|---|---|---|---|---|
| | mole/Kg de polymère x $10^2$ | | | | mn | mn | N.m | $N.m.mn^{-1}$ |
| 28 | 19 | | 22,5 | | 5,5 | 4 | 10 | 6,6 |
| 29 | 19 | | 22,5 | | 5 | 3,5 | 16 | 10,6 |
| 30 | | 37,0 | 22,5 | | 1 | 1 | 30 | 30 |
| 31 | | 37,0 | | 14,9 | 1 | 1 | 19 | 19 |

EP 0 477 342 B1

EP 0 477 342 B1

**Revendications**

1. Procédé de réticulation de (co) polymères comportant des fonctions esters caractérisé en ce que l'on fait réagir un (co)polymère comportant des fonctions ester latérales et dérivant d'un polyol et un (co)polymère comportant des fonctions ester latérales et dérivant d'un polyacide en présence d'un alcoolate alcalin à une température supérieure à 180°.

2. Procédé selon la revendication 1, caractérisé en ce que l'alcoolate est dispersé dans la matrice polymère à l'aide d'un de ses solvants.

3. Procédé selon la revendication 1 ou 2 caractérisé en ce que le (co)polymère comportant des fonctions ester latérales et dérivé d'un polyol est un (co)polymère de l'acétate de vinyle.

4. Procédé selon l'une quelconque des revendications 1 à 3, caractérisé en ce que le (co)polymère comportant des fonctions ester latérales et dérivé d'un polyacide est un (co)polymère dérivant de l'acide (méth)acrylique.

5. Composition réticulable, caractérisée en ce qu'elle renferme un (co)polymère comportant des fonctions ester latérales et dérivant d'un polyol, un (co)polymère comportant des fonctions ester latérales et dérivé d'un polyacide et un alcoolate alcalin.

6. Composition selon la revendication 5, caractérisée en ce qu'elle renferme en outre un solvant de l'alcoolate.

7. Composition selon la revendication 5 ou 6, caractérisée en ce que le (co)polymère comportant des fonctions ester latérales et dérivant d'un polyol est un (co) polymère de l'acétate de vinyle, notamment un copolymère de l'acétate de vinyle et du PVC.

8. Composition selon la revendication 5, 6 ou 7, caractérisée en ce que le (co)polymère comportant des fonctions ester latérales et dérivant d'un polyacide est un (co) polymère dérivant de l'acide (méth)acrylique, notamment un copolymère du PVC ou de l'éthylène et d'un ester de l'acide (méth)acrylique.

9. Objets conformés, caractérisés en ce qu'ils sont préparés à partir des produits obtenus par la mise en oeuvre du procédé selon l'une des revendications 1 à 4.

10. Objets conformés, caractérisés en ce qu'ils sont constitués d'une composition selon l'une des revendications 5 à 8.


**Patentansprüche**

1. Verfahren zur Vernetzung von (Co)Polymeren, die Esterfunktionen umfassen, dadurch gekennzeichnet, daß man ein (Co)Polymer, das laterale Esterfunktionen umfaßt und von einem Polyol abgeleitet ist, und ein (Co)Polymer, das laterale Esterfunktionen umfaßt und von einer Polysäure abgeleitet ist, in Gegenwart eines Alkalialkoholats bei einer Temperatur von mehr als 180 °C umsetzt.

2. Verfahren nach Anspruch 1, dadurch gekennzeichnet, daß das Alkoholat in der Polymermatrix mit Hilfe eines seiner Lösungsmittel dispergiert wird.

3. Verfahren nach Anspruch 1 oder 2, dadurch gekennzeichnet, daß das (Co)Polymer, das laterale Esterfunktionen umfaßt und von einem Polyol abgeleitet ist, ein Vinylacetat-(Co)Polymer ist.

4. Verfahren nach einem der Ansprüche 1 bis 3, dadurch gekennzeichnet, daß das (Co)Polymer, das laterale Esterfunktionen umfaßt und von einer Polysäure abgeleitet ist, ein von (Meth)acrylsäure abgeleitetes (Co)Polymer ist.

5. Vernetzbare Zusammensetzung, dadurch gekennzeichnet, daß sie ein (Co)Polymer, das laterale Esterfunktionen umfaßt und von einem Polyol abgeleitet ist, ein (Co)Polymer, das laterale Esterfunktionen umfaßt und von einer Polysäure abgeleitet ist, und ein Alkalialkoholat enthält.

6. Verfahren nach Anspruch 5, dadurch gekennzeichnet, daß sie außerdem ein Lösungsmittel für das Alkoholat enthält.

12

**7.** Verfahren nach Anspruch 5 oder 6, dadurch gekennzeichnet, daß das (Co)Polymer, das laterale Esterfunktionen umfaßt und von einem Polyol abgeleitet ist, ein Vinylacetat-(Co)Polymer, insbesondere ein Copolymer von Vinylacetat und PVC, ist.

**8.** Verfahren nach Anspruch 5, 6 oder 7, dadurch gekennzeichnet, daß das (Co)Polymer, das laterale Esterfunktionen umfaßt und von einer Polysäure abgeleitet ist, ein von (Meth)acrylsäure abgeleitetes (Co)Polymer, insbesondere ein Copolymer von PVC oder Ethylen und eines (Meth)acrylsäureesters, ist.

**9.** Formkörper, dadurch gekennzeichnet, daß sie ausgehend von Produkten hergestellt werden, die durch Ausführung des Verfahrens nach einem der Ansprüche 1 bis 4 erhalten werden.

**10.** Formkörper dadurch gekennzeichnet, daß sie aus einer Zusammensetzung nach einem der Ansprüche 5 bis 8 bestehen.

## Claims

**1.** Crosslinking process for (co)polymers containing ester functions characterized in that a (co)polymer having side ester functions and deriving from a polyol and a (co)polymer having side ester functions and deriving from a polyacid are reacted in the presence of an alkaline alcoholate at a temperature higher than 180°.

**2.** Process according to claim 1, characterized in that the alcoholate is dispersed in the polymer matrix using one of its solvents.

**3.** Process according to claim 1 or 2 characterized in that the (co)polymer having side ester functions and derived from a polyol is a (co)polymer of vinyl acetate.

**4.** Process according to any one of claims 1 to 3, characterized in that the (co)polymer having side ester functions and derived from a polyacid is a (co)polymer deriving from (meth)acrylic acid.

**5.** Crosslinkable composition, characterized in that it contains a (co)polymer having side ester functions and deriving from a polyol, a (co)polymer having side ester functions and derived from a polyacid and an alkaline alcoholate.

**6.** Composition according to claim 5, characterized in that it contains in addition a solvent of the alcoholate.

**7.** Composition according to claim 5 or 6, characterized in that the (co)polymer having side ester functions and deriving from a polyol is a (co)polymer of vinyl acetate, in particular a copolymer of vinyl acetate and PVC.

**8.** Composition according to claim 5, 6 or 7, characterized in that the (co)polymer having side ester functions and deriving from a polyacid is a (co)polymer deriving from (meth)acrylic acid, in particular a copolymer of PVC or of ethylene and a (meth)acrylic acid ester.

**9.** Formed articles, characterized in that they are prepared from the products obtained by the implementation of the process according to one of claims 1 to 4.

**10.** Formed articles, characterized in that they are constituted by a composition according to one of claims 5 to 8.